# EUROPEAN PATENT APPLICATION

(11) **EP 4 768 311 A1**
(43) Date of publication of application: **01.07.2026**
(21) Application number: 25221323.6
(22) Date of filing: 08.12.2025
(51) Int. Cl.: B60L 15/20, B60L 3/12, G09B 9/04

(54) **CONTROL SYSTEM FOR VEHICLE AND CONTROL METHOD**

(30) Priority: 26.12.2024 JP 2024230632
(71) Applicant: Toyota Jidosha Kabushiki Kaisha, Toyota-shi, Aichi-ken 471-8571 (JP)
(72) Inventor: HAYASAKA, Masato, TOYOTA-SHI, AICHI-KEN, 471-8571 (JP)
(74) Representative: Cabinet Beau de Loménie

(57) **Abstract**

A control system for a vehicle (100) that controls a vehicle (100) including an electric motor (4F, 4R) as a drive source. The system includes a vehicle model, a storage device (103), and a processing circuit. The vehicle model reproduces, in the vehicle (100), a vehicle characteristic of a virtual vehicle. The storage device stores a gear-shifting line map for a stepped transmission in an automatic gear-shifting engine vehicle as the virtual vehicle. The processing circuit executes a traveling control to imitate traveling of the virtual vehicle, based on the vehicle model. The vehicle model is a transmission model for reproducing a gear-shifting characteristic of an automatic gear-shifting engine vehicle, and includes a transmission model that is constructed based on the gear-shifting line map. The processing circuit executes a customization process of the gear-shifting characteristic according to a customized setting for the gear-shifting characteristic, when the customized setting is received from a user interface.

## Description

### BACKGROUND OF THE INVENTION

### 1. Field of the Invention

The present disclosure relates to a system and method for controlling a vehicle including an electric motor as a drive source.

### 2. Description of Related Art

Various devices for enjoying driving simulator video games have been proposed and have been put to practical use. For example, Japanese Unexamined Patent Application Publication No. 2008-180853 (JP 2008-180853 A) discloses a reaction force device for a steering wheel that is used in a driving simulator. In this related art, a reaction force that is given to the steering wheel is calculated based on a friction characteristic in which a frictional force that changes in proportion to the steering angle of the steering wheel and a coulomb friction are combined.

### SUMMARY OF THE INVENTION

An amusement about the driving simulator video game is to select a virtual vehicle that a user drives. Further, another amusement is to customize the selected virtual vehicle. In the customization of the virtual vehicle, for example, the vehicle characteristic of the selected virtual vehicle is adjusted according to the user's preference.

A case where the vehicle characteristic according to the user's preference is obtained by the customization of the vehicle characteristic will be discussed. In this case, the user is likely to expect the reflection of the vehicle characteristic after the customization in the vehicle characteristic of a real vehicle. Therefore, when the vehicle characteristic after the customization can be reflected in the vehicle characteristic of the real vehicle and the real vehicle after the reflection can be driven, the amusement for the user of the real vehicle increases.

In connection with the above description, the inventor of the present disclosure has studied a traveling control to imitate the traveling of the virtual vehicle, using a plurality of vehicle models respectively corresponding to various virtual vehicles, for the purpose of giving experiences of the ride in the various virtual vehicles, to the driver of the vehicle. A case where the virtual vehicle is an automatic gear-shifting engine vehicle (also referred to as an "AT engine vehicle", hereinafter) including a stepped transmission will be discussed. In this case, as the customization of the vehicle characteristic, there can be the customization of the gear-shifting characterization that includes the customization of the gear ratio of the stepped transmission.

However, generally, the gear shifting of the AT engine vehicle is performed based on a gear-shifting line map that prescribes a condition of switching between two adjacent gear stages. Therefore, when only the customization of the gear ratio of the stepped transmission is performed and the customization of the switching condition between gear stages is not performed, a failure can occur at the time of a traveling control to imitate the traveling of the AT engine vehicle after the customization.

Hence, the present disclosure provides a control system for a vehicle that appropriately performs the customization of the gear-shifting characteristic for realizing the traveling control to imitate the traveling of the AT engine vehicle in the vehicle including an electric motor as the drive source, and a control method therefor. In the control system for the vehicle and the control method therefor in the present disclosure, a method for restraining the occurrence of the failure when only the customization of the gear ratio of the stepped transmission of the AT engine vehicle is performed is also provided.

A first aspect of the present disclosure relates to a control system for a vehicle that controls a vehicle including an electric motor as a drive source. The control system includes a single or plurality of storage devices and a single or plurality of processing circuits. In the single or plurality of storage devices, a vehicle model and a gear-shifting line map for a stepped transmission are stored, the vehicle model being a model for reproducing, in the vehicle, a vehicle characteristic of a virtual vehicle, the stepped transmission being included in an automatic gear-shifting engine vehicle as the virtual vehicle. The single or plurality of processing circuits is configured to execute a traveling control to imitate traveling of the virtual vehicle, based on the vehicle model. The vehicle model includes a transmission model for reproducing, in the vehicle, a gear-shifting characteristic of the automatic gear-shifting engine vehicle, the transmission model being constructed based on the gear-shifting line map. The single or plurality of processing circuits is configured to execute a customization process of the gear-shifting characteristic in accordance with a customized setting for the gear-shifting characteristic, when the customized setting is received from a user interface.

A second aspect of the present disclosure relates to a control method for a vehicle including an electric motor as a drive source. In the control method, (i) a computer is caused to execute a traveling control to imitate traveling of a virtual vehicle, based on a vehicle model for reproducing, in the vehicle, a vehicle characteristic of the virtual vehicle. Here, the vehicle model includes a transmission model for reproducing, in the vehicle, a gear-shifting characteristic of an automatic gear-shifting engine vehicle as the virtual vehicle, the transmission model being constructed based on a gear-shifting line map for a stepped transmission included in the automatic gear-shifting engine vehicle. Furthermore, (ii) the computer is caused to execute a customization process of the gear-shifting characteristic in accordance with a customized setting for the gear-shifting characteristic, when the customized setting is received from a user interface.

With the control system for the vehicle and the control method therefor in the present disclosure, in the case where the customized setting for the gear-shifting characteristic of the AT engine vehicle is received from the user interface, the customization process of the gear-shifting characteristic is performed in accordance with the customized setting. That is, a user of the vehicle can customize the setting for the gear-shifting characteristic of the AT engine vehicle that is reproduced by the vehicle, to the user's preferred setting, using the user interface.

Further, as understood from later-described embodiments, in the present disclosure, in the case where only the customization of the gear ratio of the stepped transmission is performed, a switching condition between gear stages is customized based on the gear ratio included in the customized setting. Accordingly, it is possible to restrain the occurrence of the failure when only the customization of the gear ratio is performed.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram showing a configuration of a vehicle to which a control system according to an embodiment as an example of the present disclosure is applied;
FIG. 2 is a tree diagram showing exemplary control modes of the vehicle that can be selected by a control device in the control system;
FIG. 3 is a diagram showing a configuration of the control device that is relevant to a traveling control of the vehicle;
FIG. 4 is a diagram showing a configuration of the control device that is relevant to a sound control of the vehicle;
FIG. 5 is a tree diagram showing an exemplary operation procedure of an HMI for customization of a characteristic of the vehicle;
FIG. 6 is a diagram showing an exemplary customization method for a gear-shifting characteristic by an operation of the HMI;
FIG. 7 is a diagram showing an exemplary customization method for the gear-shifting characteristic by the operation of the HMI;
FIG. 8 is a diagram showing an exemplary customization method for the gear-shifting characteristic by the operation of the HMI;
FIG. 9 is a diagram showing an exemplary customization method for the gear-shifting characteristic by the operation of the HMI;
FIG. 10 is a diagram showing an exemplary customization method for an engine characteristic by the operation of the HMI;
FIG. 11 is a diagram showing an exemplary customization method for the engine characteristic by the operation of the HMI;
FIG. 12 is a flowchart showing a process that is executed by a customization system for the customization of the characteristic of the vehicle;
FIG. 13 is a tree diagram showing other exemplary control modes of the vehicle that can be selected by the control device;
FIG. 14 is a diagram showing a configuration of the control device that is relevant to the traveling control of the vehicle;
FIG. 15 is a tree diagram showing an exemplary operation procedure of the HMI for the customization of the gear-shifting characteristic of an AT engine vehicle;
FIG. 16 is a diagram showing an exemplary customization method for the gear-shifting characteristic by the operation of the HMI;
FIG. 17 is a diagram showing an exemplary customization method for the gear-shifting characteristic by the operation of the HMI;
FIG. 18 is a diagram showing an exemplary customization method for the gear-shifting characteristic by the operation of the HMI;
FIG. 19 is a diagram showing an exemplary customization method for the gear-shifting characteristic by the operation of the HMI; and
FIG. 20 is a flowchart showing a process that is executed by a customization system for the customization of the characteristic of the vehicle.

### DETAILED DESCRIPTION OF EMBODIMENTS

### 1. A configuration of a vehicle will be described below.

### 1-1. Exemplary Configuration of Dynamic Power System of Vehicle

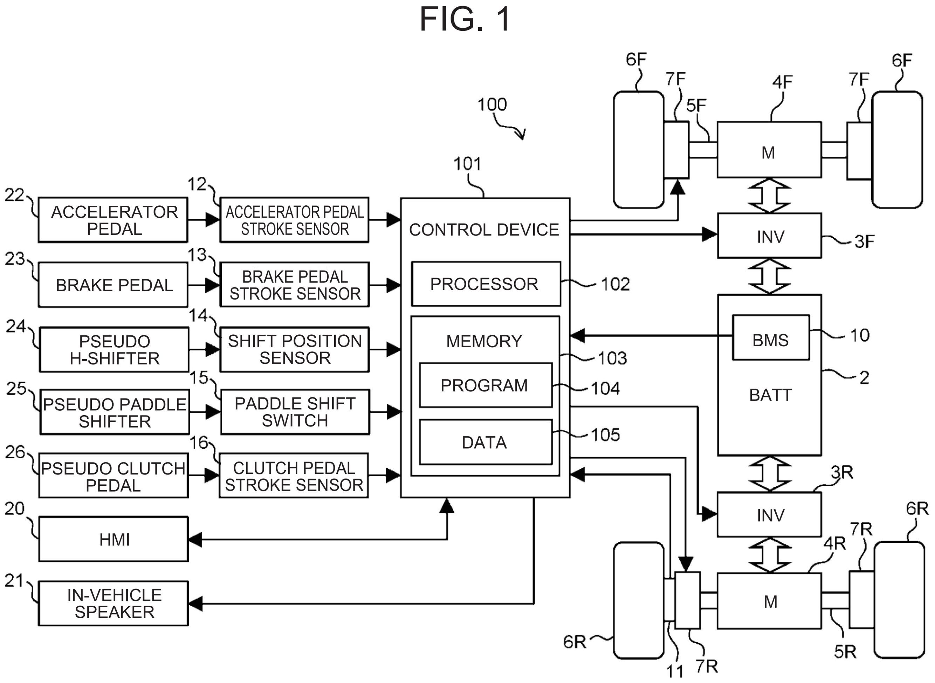

FIG. 1 is a diagram schematically showing a configuration of a vehicle 100 to which a control system according to an embodiment of the present disclosure is applied. First, an exemplary configuration of a dynamic power system of the vehicle 100 will be described with reference to FIG. 1.

The vehicle 100 includes two electric motors (M) 4F, 4R at the front and the rear, as dynamic power sources for traveling. For example, the electric motors 4F, 4R are three-phase alternating-current motors. The front electric motor 4F is connected to a front drive shaft 5F that drives front wheels 6F. The rear electric motor 4R is connected to a rear drive shaft 5R that drives rear wheels 6R. The front wheels 6F are suspended by right and left electronically-controlled front suspensions 7F that are independent from each other. The rear wheels 6R are suspended by right and left electronically-controlled rear suspensions 7R that are independent from each other.

Inverters (INV) 3F, 3R are attached to the front electric motor 4F and the rear electric motor 4R, respectively. Each of the front inverter 3F and the rear inverter 3R is connected to a battery (BATT) 2. The battery 2 stores electric energy for driving the electric motors 4F, 4R. That is, the vehicle 100 is a battery electric vehicle (BEV) that travels using the electric energy stored in the battery 2. For example, the inverters 3F, 3R are voltage-type inverters, and control the torques of the electric motors 4F, 4R by a PWM control.

### 1-2. Exemplary Configuration of Control Power System of Vehicle

Subsequently, an exemplary configuration of a control system of the vehicle 100 will be described with reference to FIG. 1.

The vehicle 100 includes a battery management system (BMS) 10. The battery management system 10 is a device that monitors a cell voltage, a current, a temperature, and others of the battery 2. The battery management system 10 has a function to estimate the charge state (SOC) of the battery 2.

The vehicle 100 includes a vehicle speed sensor 11. At least one of unillustrated vehicle wheel speed sensors that are respectively provided at the right and left front wheels 6F and the right and left rear wheels 6R is used as the vehicle speed sensor 11. Further, the vehicle 100 includes an accelerator pedal stroke sensor 12. The accelerator pedal stroke sensor 12 is provided at an accelerator pedal 22, and outputs a signal indicating a stepping amount of the accelerator pedal 22, that is, an accelerator operation amount. Furthermore, the vehicle 100 includes a brake pedal stroke sensor 13. The brake pedal stroke sensor 13 is provided at a brake pedal 23, and outputs a signal indicating a stepping amount of the brake pedal 23, that is, a brake operation amount.

The accelerator pedal 22 and the brake pedal 23 are driving operation members that are used for the driving of the vehicle 100. Separately from the driving operation members, the vehicle 100 includes a pseudo gear-shifting operation member that imitates an operation member that is used for the gear-shifting operation of a manual gear-shifting engine vehicle (also referred to as an "MT engine vehicle", hereinafter) as a virtual vehicle. The pseudo gear-shifting operation member includes a pseudo H-shifter 24, a pseudo paddle shifter 25, and a pseudo clutch pedal 26, which will be described below.

The pseudo H-shifter 24 is a dummy that is different from an original H-shifter. The pseudo H-shifter 24 has a structure that resembles a shift stick provided at a console, and can be moved among shift positions along an H-shaped gate. However, the vehicle 100 includes no real transmission, and therefore, the shift positions of the pseudo H-shifter 24 are virtual shift positions. The pseudo H-shifter 24 is provided with a shift position sensor 14. The shift position sensor 14 outputs a signal indicating a shift position selected by the pseudo H-shifter 24.

The pseudo paddle shifter 25 is a dummy that is different from an original paddle shifter that is a kind of sequential shifter. The pseudo paddle shifter 25 has a structure that resembles a shift paddle attached to a steering wheel, and right and left paddles can be independently moved. The pseudo paddle shifter 25 is provided with a paddle shift switch 15. The paddle shift switch 15 outputs an upshift signal when the right paddle is pulled, and outputs a downshift signal when the left paddle is pulled.

The pseudo clutch pedal 26 is a dummy that is different from an original clutch pedal. The pseudo clutch pedal 26 has a structure that resembles a clutch pedal included in a conventional MT engine vehicle. For example, the pseudo clutch pedal 26 includes a reaction force mechanism that generates a reaction force against the stepping by a driver. A position when no stepping force is applied is a starting end position of the pseudo clutch pedal 26, and a position when the pseudo clutch pedal 26 is pressed down to a farthest point is a terminal end position of the pseudo clutch pedal 26. The driver can operate the pseudo clutch pedal 26 from the starting end position to the terminal end position against the reaction force from the reaction force mechanism. The pseudo clutch pedal 26 is provided with a clutch pedal stroke sensor 16. The clutch pedal stroke sensor 16 outputs a signal indicating the stepping amount of the pseudo clutch pedal 26. The vehicle 100 includes no real clutch, and therefore, an operation amount of the pseudo clutch pedal 26, that is, a clutch operation amount is a virtual clutch operation amount.

The pseudo clutch pedal 26 is a pedal-type operation device that is operated by a foot, but a lever-type operation device or dial-type operation device that is operated by a hand may be included as a pseudo clutch operation device. As the pseudo clutch operation device, various structures can be employed, as long as the driver can operate the pseudo clutch operation device from the starting end position to the terminal end position against the reaction force and can obtain, through the foot or hand, an operational feeling at the time of the operation of the clutch pedal included in the conventional MT engine vehicle.

The vehicle 100 includes a human-machine interface (HMI) 20 as a user interface and an in-vehicle speaker 21. The HMI 20 includes a touch panel display. The HMI 20 displays information on the touch panel display, and accepts an input from the driver by the touch operation of the touch panel display. The in-vehicle speaker 21 can provide information to the driver by sound, and can output a later-described pseudo engine sound.

The vehicle 100 includes a control device 101. Sensors and control target apparatuses equipped in the vehicle 100 are connected to the control device 101 by an in-vehicle network. Various sensors are equipped in the vehicle 100, in addition to the battery management system 10, the vehicle speed sensor 11, the accelerator pedal stroke sensor 12, the brake pedal stroke sensor 13, the shift position sensor 14, the paddle shift switch 15, and the clutch pedal stroke sensor 16.

Typically, the control device 101 is an electronic control unit (ECU). The control device 101 may be a combination of a plurality of ECUs. The control device 101 includes at least a processor 102 and a storage device (referred to as a memory, hereinafter) 103. The memory 103 includes a RAM in which data is temporarily recorded and a ROM in which a program 104 capable of being executed by the processor 102 and a variety of data 105 related to programs are saved. The program 104 is constituted by a plurality of instruction codes. The processor 102 reads the program 104 and the data 105 from the memory 103, executes the program 104, and generates a control signal based on signals acquired from sensors. The number of processors 102 included in the control device 101 may be one, or may be a plural number.

The control device 101 can control the vehicle 100 in various control modes. The control mode can be selected by the driver, through the driver's touch operation of the touch panel display of the HMI 20. More specifically, by the touch operation of the touch panel display of the HMI 20, a single or plurality of programs 104 linked with the touch operation is read from the memory 103, and is executed by the processor 102. Control modes of the vehicle 100 that can be selected by the driver's operation of the HMI 20 and that are executed by the control device 101 will be described below.

### 2. Next, the control mode of the vehicle will be described.

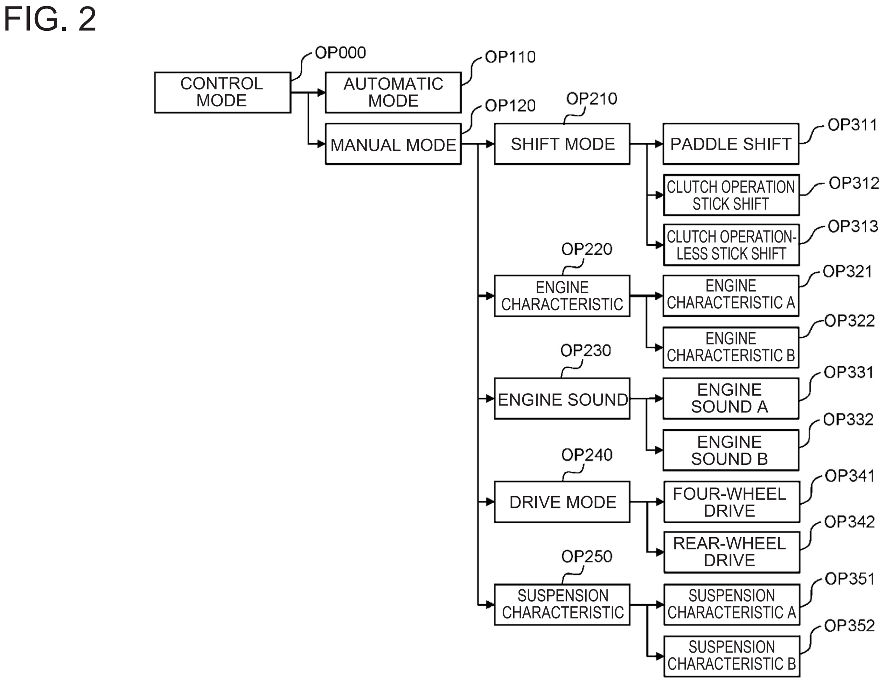

FIG. 2 is a tree diagram showing exemplary control modes of the vehicle 100 that can be selected by the control device 101. On the HMI 20, a selection screen is displayed on the touch panel display, in accordance with a control tree shown in FIG. 2.

An option "control mode" OP000 is displayed on the initial screen of the HMI 20. By selecting the option "control mode" OP000, an option "automatic mode" OP110 and an option "manual mode" OP120 are displayed on the touch panel display. In the case where the option "automatic mode" OP110 is selected, the control mode of the vehicle 100 switches to an automatic mode. The automatic mode is a control mode for driving the vehicle 100 as an ordinary BEV. In the automatic mode, basically, the driver can drive the vehicle 100 simply by operating the accelerator pedal 22, the brake pedal 23, and an unillustrated steering wheel. In the automatic mode, the shift operation of the pseudo H-shifter 24, the shift operation of the pseudo paddle shifter 25, and the clutch operation of the pseudo clutch pedal 26 are invalid.

In the case where the option "manual mode" OP120 is selected, the control mode of the vehicle 100 switches to a manual mode. The manual mode is a control mode for causing the vehicle 100 to act as if the vehicle 100 were the MT engine vehicle. By selecting the option "manual mode" OP120, an option "shift mode" OP210, an option "engine characteristic" OP220, an option "engine sound" OP230, an option "drive mode" OP240, and an option "suspension characteristic" OP250 are displayed on the touch panel display. The driver can decide characteristics of the MT engine vehicle that are reproduced in the vehicle 100, by appropriately combining the options OP210 to OP250.

The option "shift mode" OP210 is an option for selecting the shift mode of the manual transmission when the vehicle 100 acts as if the vehicle 100 were the MT engine vehicle. By selecting the option "shift mode" OP210, an option "paddle shift" OP311, an option "clutch operation stick shift" OP312, and an option "clutch operation-less stick shift" OP313 are displayed on the touch panel display. In the case where the option "paddle shift" OP311 is selected, the shift mode of the manual transmission that is reproduced in the vehicle 100 switches to a paddle shift mode. The paddle shift mode is a mode in which the pseudo paddle shifter 25 is used for the shift operation. In the paddle shift mode, the shift operation of the pseudo H-shifter 24 is invalid. In the paddle shift mode, the action when the transmission gear ratio of the manual gear-shifting type is switched is reproduced by the shift operation of the pseudo paddle shifter 25. In a real paddle shift-type manual transmission, the clutch operation is automatically performed by a robot. Therefore, in the paddle shift mode, the clutch operation of the pseudo clutch pedal 26 is not necessary. In the paddle shift mode, the clutch operation of the pseudo clutch pedal 26 is invalid.

In the case where the option "clutch operation stick shift" OP312 is selected, a clutch operation stick shift mode is selected. The clutch operation stick mode is a mode in which the pseudo H-shifter 24 and the pseudo clutch pedal 26 are used for the shift operation. In this mode, the action when the transmission gear ratio of the manual gear-shifting type is switched is reproduced by the shift operation of the pseudo H-shifter 24 and the clutch operation of the pseudo clutch pedal 26. In this mode, the shift operation of the pseudo paddle shifter 25 is invalid.

In the case where the option "clutch operation-less stick shift" OP313 is selected, a clutch operation-less stick shift mode is selected. The clutch operation-less stick mode is a mode in which only the pseudo H-shifter 24 is used for the shift operation without using the pseudo clutch pedal 26. As a real H-shifter-type manual transmission, there are a transmission in which the clutch operation is performed by the driver and a transmission in which the clutch operation is performed by a robot. In this mode, the action when the transmission gear ratio of the manual gear-shifting type is switched is reproduced by the shift operation of the pseudo H-shifter 24. In this mode, the shift operation of the pseudo paddle shifter 25 and the clutch operation of the pseudo clutch pedal 26 are invalid.

The option "engine characteristic" OP220 is an option for selecting the characteristic of an internal combustion engine when the vehicle 100 acts as if the vehicle 100 were the MT engine vehicle. By selecting the option "engine characteristic" OP220, for example, an option "engine characteristic A" OP321 and an option "engine characteristic B" OP322 are displayed on the touch panel display. An engine characteristic A and an engine characteristic B are different engine characteristics. For the engine characteristics A and B, for example, engine characteristics, such as a low-middle rotation type, a high rotation type, and a whole region type, are set as a default setting.

The option "engine sound" OP230 is an option for selecting the engine sound that is reproduced in the vehicle 100. By selecting the option "engine sound" OP230, an option "engine sound A" OP331 and an option "engine sound B" OP332 are displayed on the tough panel display. An engine sound A and an engine sound B are different engine sounds. For the engine sounds A and B, for example, engine sounds of a direct-4 supercharged engine, a flat-6 engine, a V12 engine, and others are set as a default setting.

The option "drive mode" OP240 is an option for selecting the drive mode of the vehicle 100. By selecting the option "drive mode" OP240, an option "four-wheel drive" OP341 and an option "rear-wheel drive" OP342 are displayed on the touch panel display. In the case where the option "four-wheel drive" OP341 is selected, the drive mode of the vehicle 100 switches to a four-wheel drive mode. In the four-wheel drive mode, the front wheels 6F are driven by the front electric motor 4F, and the rear wheels 6R are driven by the rear electric motor 4R. The torque distribution between the front wheels 6F and the rear wheels 6R may be fixed or be varied, by the control of the electric motors 4F, 4R by the inverters 3F, 3R. In the case where the option "rear-wheel drive" OP342 is selected, the drive mode of the vehicle 100 switches to a rear-wheel drive mode. In the rear-wheel drive mode, only the rear wheels 6R are driven by the rear electric motor 4R. In the vehicle 100, a front-wheel drive mode in which only the front wheels 6F are driven by the front electric motor 4F may be selectable, instead of or in addition to the rear-wheel drive mode.

The option "suspension characteristic" OP250 is an option for selecting the suspension characteristic of the vehicle 100. By selecting the option "suspension characteristic" OP250, an option "suspension characteristic A" OP351 and an option "suspension characteristic B" OP352 are displayed on the touch panel display. A suspension characteristic A and a suspension characteristic B are different in the damping force of the suspensions 7F, 7R. For the suspension characteristics A and B, for example, suspension characteristics, such as a soft suspension, a medium suspension, and a hard suspension, are set as a default setting.

By operating the touch panel display of the HMI 20 in accordance with the above-described control tree, the control mode of the vehicle 100 can be switched to driver's preferred control mode. Switchable control modes include a mode relevant to the traveling control of the vehicle 100 and a mode relevant to the sound control of the vehicle 100. Specifically, a mode relevant to the option "engine sound" OP230 is the mode relevant to the sound control, and the other modes are included in the mode relevant to the traveling control. In subsequent sections, the traveling control and sound control of the vehicle 100 by the control device 101 will be described.

### 3. Next, the traveling control of the vehicle will be described.

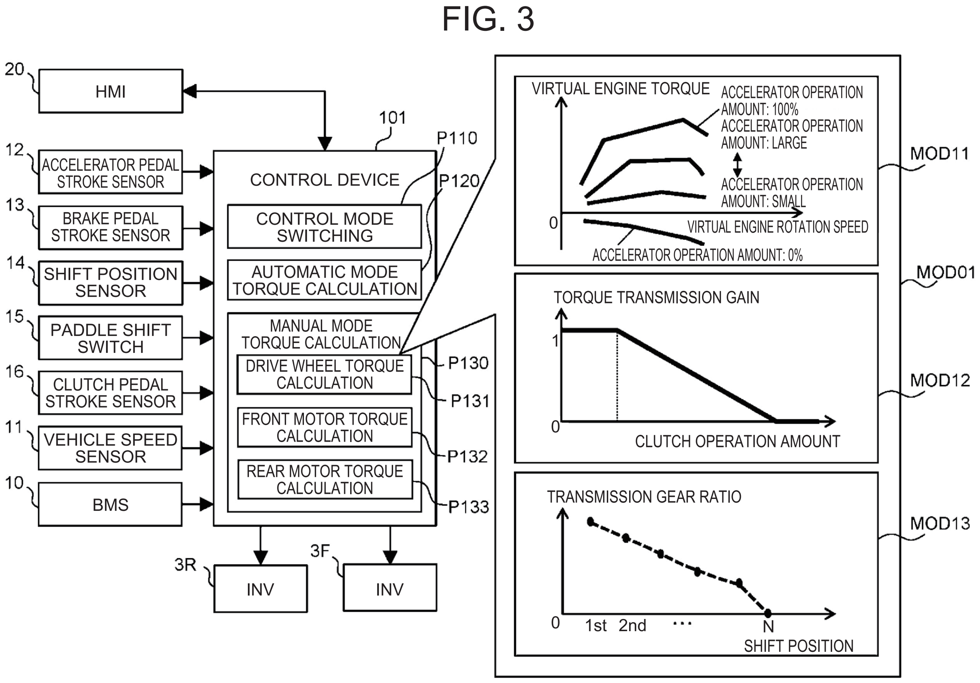

FIG. 3 is a diagram showing a configuration of the control device 101 that is relevant to the traveling control of the vehicle 100. More specifically, FIG. 3 shows a configuration that is particularly relevant to a torque control of the traveling control. The processor 102 executes a single or plurality of programs 104 for the traveling control that is stored in the memory 103, and thereby, the processor 102 functions as a traveling control device.

The control device 101 as the traveling control device receives a control mode signal from the HMI 20. The control mode signal includes information relevant to the control mode selected by the driver. The control device 101 executes a process P110 based on the control mode signal. In the process P110, the control mode is switched in accordance with the control mode signal. The switching of the control mode that particularly influences the traveling control is the switching between the automatic mode and the manual mode.

In the case where the control mode is switched to the automatic mode, the control device 101 executes a process P120 for calculating the torque in the automatic mode. In the process P120, the control device 101 acquires the vehicle speed from the signal of the vehicle speed sensor 11, and acquires the accelerator operation amount from the signal of the accelerator pedal stroke sensor 12. The control device 101 has a motor torque map in which the accelerator operation amount and the vehicle speed are adopted as parameters. The control device 101 inputs the vehicle speed and the accelerator operation amount to the motor torque map, and controls the inverters 3F, 3R such that the electric motors 4F, 4R generate the torque obtained by the motor torque map.

In the case where the control mode is switched to the manual mode, the control device 101 executes a process P130 for calculating the torque in the manual mode. The process P130 includes a process P131 for calculating the torque that is generated in drive wheels. Further, the process P130 includes a process P132 and a process P133. The process P132 is a process for calculating the torque that is generated by the front electric motor 4F, and the process P133 is a process for calculating the torque that is generated by the rear electric motor 4R. The process P132 and the process P133 are executed in accordance with the drive wheel torque calculated in the process P130 and the torque distribution between the front wheels 6F and the rear wheels 6R.

For the calculation of the drive wheel torque in the process P131, a vehicle model MOD01 is used. The vehicle model MOD01 includes an engine model MOD11, a clutch model MOD12, and a transmission model MOD13. An engine that is virtually realized by the vehicle model MOD01 is referred to as a virtual engine, a clutch that is virtually realized by the vehicle model MOD01 is referred to as a virtual clutch, and a transmission that is virtually realized by the vehicle model MOD01 is referred to as a virtual transmission. In the engine model MOD11, the virtual engine is modeled. In the clutch model MOD12, the virtual clutch is modeled. In the transmission model MOD13, the virtual transmission is modeled.

The engine model MOD11 calculates a virtual engine rotation speed and virtual engine torque. The virtual engine rotation speed is calculated from the vehicle speed, the total speed reduction ratio, and the slip ratio of the virtual clutch. The virtual engine torque is calculated from the virtual engine rotation speed and the accelerator operation amount. The vehicle speed is acquired from the signal of the vehicle speed sensor 11. The accelerator operation amount is acquired from the signal of the accelerator pedal stroke sensor 12. The total speed reduction ratio is a numerical value that is obtained by multiplying the transmission gear ratio of the virtual transmission by a speed reduction ratio that is determined by a mechanical structure from the virtual transmission to the drive wheels. In the engine model MOD11, a relationship between the virtual engine rotation speed and the virtual engine torque is prescribed for each accelerator operation amount. The driver can select the engine characteristic of the engine model MOD11 by the operation of the HMI 20.

The clutch model MOD12 calculates a torque transmission gain. The torque transmission gain is a gain for calculating a torque transmission degree of the virtual clutch that corresponds to the clutch operation amount. In the case where the clutch operation stick shift mode is selected as the shift mode, the clutch operation amount is acquired from the signal of the clutch pedal stroke sensor 16. The clutch operation amount is 0% at the starting end position of the pseudo clutch pedal 26, and is 100% at the terminal end position of the pseudo clutch pedal 26. In the clutch model MOD12, the torque transmission gain is given with respect to the clutch operation amount. The torque transmission gain is converted into the clutch torque capacity of the virtual clutch, that is, into a virtual clutch torque capacity. Then, virtual clutch torque that is input from the virtual clutch to the virtual transmission is calculated based on the comparison between the virtual clutch torque capacity and the virtual engine torque calculated in the engine model MOD11. Further, in the clutch model MOD12, a value resulting from subtracting the torque transmission gain from 1 is calculated as a slip ratio. The slip ratio is used for the calculation of the virtual engine rotation speed in the engine model MOD11.

In the case where the paddle shift mode is selected as the shift mode, the clutch operation amount that is input to the clutch model MOD12 is calculated using a clutch operation model. Further, also in the case where the clutch operation-less stick shift mode is selected as the shift mode, the clutch operation amount that is input to the clutch model MOD12 is calculated using the clutch operation model. The clutch operation model is a model that simulates the clutch operation by an exemplary driver. In the case where the paddle shift mode is selected, the vehicle speed, the virtual engine rotation speed, and the signal from the paddle shift switch 15 are input to the clutch operation model. In the case where the clutch operation-less stick shift mode is selected, the vehicle speed, the virtual engine rotation speed, and the signal from the shift position sensor 14 are input to the clutch operation model.

The signal from the paddle shift switch 15 and the signal from the shift position sensor 14 are used for weighing the timing of the clutch operation. When the shift operation by the driver is detected by the signal from the paddle shift switch 15 and the signal from the shift position sensor 14, the clutch operation amount is maximized in the clutch operation model such that the virtual clutch is disengaged. The vehicle speed and the virtual engine rotation speed are used for the calculation of the clutch operation amount. In the clutch operation model, the clutch operation amount is calculated based on a rotation speed difference between the rotation speed of an input shaft of the virtual transmission that is calculated from the vehicle speed and the virtual engine rotation speed, such that the rotation speed of the input shaft of the virtual transmission smoothly becomes equal to the virtual engine rotation speed.

The transmission model MOD13 calculates a virtual transmission gear ratio. The virtual transmission gear ratio is a transmission gear ratio that is determined by the virtual shift position in the virtual transmission. The virtual transmission gear ratio is set for each shift position. A maximal virtual transmission gear ratio is set for a first gear, and the virtual transmission gear ratio decreases in the order of a second gear, a third gear, a fourth gear, .... In each stick shift mode, the shift positions correspond to signals of the shift position sensor 14 on a one-to-one basis. In the paddle shift mode, the shift position is shifted up by one step in response to the upshift signal of the paddle shift switch 15, and is shifted down by one step in response to the downshift signal of the paddle shift switch 15. In the pseudo H-shifter 24, the number of shift positions is physically determined, but in the pseudo paddle shifter 25, there is no physical limitation about the number of shift positions. Therefore, a setting can be performed such that the transmission model MOD13 is different between the stick shift mode and the paddle shift mode and the number of shift positions in the paddle shift mode is larger than the number of shift positions in the stick shift mode.

The transmission model MOD13 calculates virtual transmission torque using the virtual transmission gear ratio and the virtual clutch torque. The virtual transmission torque is virtual torque that is output from the virtual transmission. The control device 101 controls the inverters 3F, 3R such that the output torques of the electric motors 4F, 4R are changed depending on the virtual transmission torque. The virtual transmission torque changes discontinuously according to switching of the virtual gear ratio. The discontinuous change in the virtual transmission torque generates torque shock in the vehicle 100, so that a similar operational feeling to the operational feeling for a vehicle including a stepped transmission is obtained.

The vehicle model MOD01 calculates the drive wheel torque from the virtual transmission torque and a speed reduction ratio. In the case where the four-wheel drive mode is selected as the drive mode, the drive wheel torque is the sum of torques that act on the right and left front wheels 6F and the right and left rear wheels 6R. The torque distribution between the front wheels 6F and the rear wheels 6R may be fixed, or may be changed actively or passively. In the case where the rear-wheel drive mode is selected as the drive mode, the drive wheel torque is the sum of torques that act on the right and left rear wheels 6R.

In the process P132, the torque (front motor torque) of the front electric motor 4F in the manual mode is calculated by multiplying the drive wheel torque calculated in the process P131 by a torque distribution ratio for the front wheels 6F and a speed reduction ratio from an output shaft of the front electric motor 4F to the front wheels 6F. The control device 101 controls the front inverter 3F such that the front electric motor 4F generates the front motor torque calculated in the process P132.

In the process P133, the torque (rear motor torque) of the rear electric motor 4R in the manual mode is calculated by multiplying the drive wheel torque calculated in the process P131 by a torque distribution ratio for the rear wheels 6R and a speed reduction ratio from an output shaft of the rear electric motor 4R to the rear wheels 6R. The control device 101 controls the rear inverter 3R such that the rear electric motor 4R generates the rear motor torque calculated in the process P133.

In the configuration shown in FIG. 3, the battery management system 10 and the brake pedal stroke sensor 13 are not always necessary for the above-described traveling control. However, in the case where the switching of the control mode influences the SOC of the battery 2, the signal of the battery management system 10 may be used as information for determining whether the switching of the control mode is possible. Further, in the case where the operation method of the vehicle 100 is greatly changed, for example, in the case of the switching between the automatic mode and the manual mode, the condition of the switching may include a condition that the brake pedal 23 has been stepped. In that case, the signal of the brake pedal stroke sensor 13 can be used as information for determining whether the brake pedal 23 has been stepped.

### 4. Next, the sound control of the vehicle will be described.

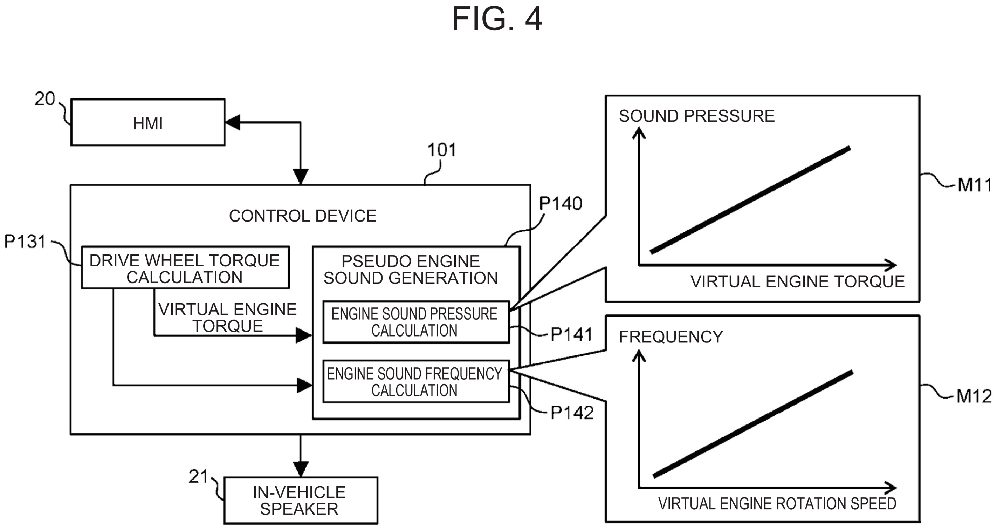

FIG. 4 is a diagram showing a configuration of the control device 101 that is relevant to the sound control of the vehicle 100. The processor 102 executes a single or plurality of programs 104 for the sound control that is stored in the memory 103, and thereby, the processor 102 functions as a sound control device. The processor 102 that functions as the torque control device and the processor 102 that functions as the sound control device may be different, or may be identical.

The control device 101 as the sound control device can emit sounds that are artificially generated, from the in-vehicle speaker 21. One of the artificial sounds is a pseudo engine sound that resembles an engine sound in a conventional internal combustion engine vehicle. In the case where a control mode signal indicating the selection of the manual mode is input from the HMI 20, the control device 101 as the sound control device executes a process P140. In the process P140, the pseudo engine sound is generated based on the virtual engine torque calculated in the process P131 and the virtual engine rotation speed.

In the process P140, an engine sound selected through the HMI 20 is used as a sound source of the pseudo engine sound that is emitted from the in-vehicle speaker 21. However, in the process P140, the sound of the sound source is not used with no change. In the process P140, the sound pressure of the sound source is changed by an amplifier, for example, and the frequency of the sound source is changed by a frequency modulator, for example.

The process P140 includes a process P141 of calculating an engine sound pressure and a process P142 of calculating an engine sound frequency. In the process P141, the sound pressure of the pseudo engine sound is calculated from the virtual engine torque, using a sound pressure map M11. The sound pressure map M11 is created such that the higher the virtual engine torque is, the higher the sound pressure is. In the process P142, the frequency of the pseudo engine sound is calculated from the virtual engine rotation speed, using a frequency map M12. The frequency map M12 is created such that the higher the virtual engine rotation speed is, the higher the frequency is. The virtual engine torque and the virtual engine rotation speed are changed by the accelerator operation, shift operation, and clutch operation by the driver. The sound pressure and the frequency of the pseudo engine sound are changed depending on the virtual engine torque and the virtual engine rotation speed that are changed as described above, and thereby, the driver can have a realistic feeling as if the driver were driving a real MT engine vehicle.

### 5. Next, the customization of the characteristic of the vehicle will be described.

### 5-1. Overview of Customization

The driver of the vehicle 100 switches the control mode to the manual mode by the operating the HMI 20, and thereby, can enjoy the operation of the MT engine vehicle, in the vehicle 100. Further, the driver selects a preferred option from options that are previously prepared for various modes including the shift mode and the engine characteristic, and thereby, can set driver's preferred characteristic as the vehicle characteristic of the MT engine vehicle that is reproduced in the vehicle 100.

However, there is a possibility that some users, as exemplified by a driver that has sufficiently enjoyed the driving in the manual mode, cannot get satisfaction from the setting for the vehicle characteristic by the combination among the previously prepared options. For example, in this world, there are MT engine vehicles having various vehicle characteristics, but all vehicle characteristics of vehicles cannot be always realized by the combination among the previously set options. However, some users are likely to hope the realization of vehicle characteristics that cannot be realized by the combination among the previously set options. For meeting the demand of such users, the vehicle 100 includes a system (also referred to as a "customization system", hereinafter) that permits users to freely customize the vehicle characteristic of the MT engine vehicle that is reproduced in the vehicle 100. The customization system is constituted by the control device 101 and the HMI 20.

### 5-2. Procedure of Customization

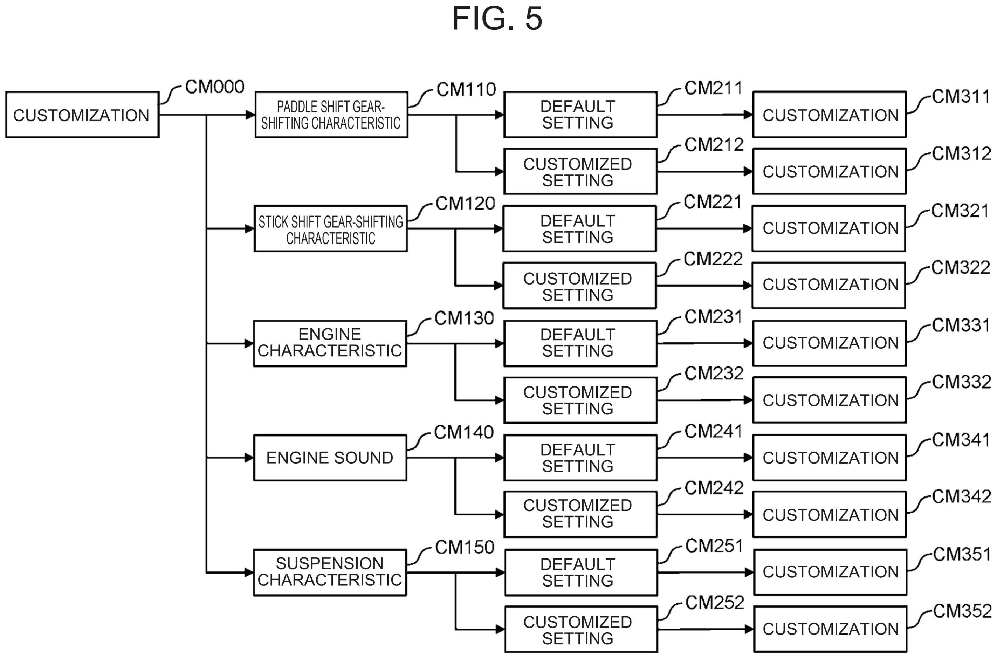

FIG. 5 is a tree diagram showing an exemplary operation procedure of the HMI 20 for the customization of the vehicle characteristic. An option "customization" CM000 is displayed on a screen at the same hierarchy as or a lower hierarchy than the option "control mode" OP000 (see FIG. 2) on the HMI 20. By selecting the option "customization" CM000, an option "paddle shift gear-shifting characteristic" CM110, an option "stick shift gear-shifting characteristic" CM120, an option "engine characteristic" CM130, an option "engine sound" CM140, and an option "suspension characteristic" CM150 are displayed on the touch panel display. From the options CM110 to CM150, the user can select the option for a characteristic that is customized.

In the case where the option "paddle shift gear-shifting characteristic" CM110 is selected, an option "default setting" CM211 and an option "customized setting" CM212 are allowed to be selected. In the case where the user selects the option "default setting" CM211, the setting for the gear-shifting characteristic in the paddle shift mode is a default setting that is previously set. In the case where the user selects the option "customized setting" CM212, the setting for the gear-shifting characteristic in the paddle shift mode is a customized setting that is customized by the user. By the switching between the two options, the user can arbitrarily switch the gear-shifting characteristic in the paddle shift mode between the default setting and the customized setting.

The customized setting is registered in the memory 103 by the user, and thereby can be used. Therefore, in the initial state, the option "customized setting" CM212 is not allowed to be selected. For the registration of the customized setting, an option "customization" CM311 is selected in a state where the option "default setting" CM211 has been selected. By the selection of the option "customization" CM311, the user can customize the gear-shifting characteristic in the paddle shift mode, based on the default setting, and can register the customized gear-shifting characteristic as the customized setting. Examples of the customization of the gear-shifting characteristic include the alteration of the transmission gear ratio for each shift position. The alteration of the number of shift positions may be further included. In the case where the customized setting has been already registered in the memory 103, an option "customization" CM312 may be selected in a state where the option "customized setting" CM212 has been selected. By the selection of the option "customization" CM312, the user can customize the gear-shifting characteristic in the paddle shift mode, based on the currently registered customized setting. The customized gear-shifting characteristic is registered in the memory 103 as a new customized setting.

In the case where the option "stick shift gear-shifting characteristic" CM120 is selected, the gear-shifting characteristics in the clutch operation stick shift mode and the clutch operation-less stick shift mode can be customized. The procedure of the customization of the gear-shifting characteristics in the stick shift modes is the same as the procedure of the customization of the gear-shifting characteristic in the paddle shift mode. By selecting an option "default setting" CM221 and selecting an option "customization" CM321, the user can customize the gear-shifting characteristics in the stick shift modes, based on the default setting. Further, by selecting an option "customized setting" CM222 and selecting an option "customization" CM322, the user can customize the gear-shifting characteristics in the stick shift modes, based on the currently registered customized setting. Examples of the customization of the gear-shifting characteristics include the alteration of the transmission gear ratio for each shift position. However, in the stick shift modes, the number of shift positions is physically determined by the structure of the pseudo H-shifter 24. Therefore, the customization of the gear-shifting characteristics in the stick shift modes does not include the alteration of the number of shift positions.

In the case where the option "engine characteristic" CM130 is selected, it is possible to customize the engine characteristic of the MT engine vehicle that is reproduced in the vehicle 100. The procedure of the customization of the engine characteristic is the same as the procedure of the customization of the gear-shifting characteristic. By selecting an option "default setting" CM231 and selecting an option "customization" CM331, the user can customize the engine characteristic based on the default setting. The setting for the engine characteristic A or the engine characteristic B can be selected as the default setting. Further, by selecting an option "customized setting" CM232 and selecting an option "customization" CM332, the user can customize the engine characteristic based on the currently registered customized setting. Examples of the customization of the engine characteristic include the alteration of the map for the engine rotation speed and the engine torque. The alteration of the map for the accelerator operation amount and the engine torque may be further included.

In the case where the option "engine sound" CM140 is selected, it is possible to customize the pseudo engine sound of the MT engine vehicle that is reproduced in the vehicle 100. The procedure of the customization of the pseudo engine sound is the same as the procedure of the customization of the gear-shifting characteristic. By selecting an option "default setting" CM241 and selecting an option "customization" CM341, the user can customize the pseudo engine sound based on the default setting. The setting for the engine sound A or the engine sound B can be selected as the default setting. Further, by selecting an option "customized setting" CM242 and selecting an option "customization" CM342, the user can customize the pseudo engine sound based on the currently registered customized setting. Examples of the customization of the engine sound include the alteration of the map for the sound pressure and the engine torque and the alteration of the map for the frequency and the engine rotation speed. The alteration of the sound source may be further included.

In the case where the option "suspension characteristic" CM150 is selected, it is possible to customize the suspension characteristic. The procedure of the customization of the suspension characteristic is the same as the procedure of the customization of the gear-shifting characteristic. By selecting an option "default setting" CM251 and selecting an option "customization" CM351, the user can customize the suspension characteristic based on the default setting. The setting for the suspension characteristic A or the suspension characteristic B can be selected as the default setting. Further, by selecting an option "customized setting" CM252 and selecting an option "customization" CM352, the user can customize the suspension characteristic based on the currently registered customized setting. Examples of the customization of the suspension characteristic include the alteration of the suspension damping force. The suspension damping force on the front wheel side and the suspension damping force on the rear wheel side may be capable of being independently altered.

### 5-3. Next, specific examples of the customization will be described.

### 5-3-1. Customization Method for Gear-Shifting Characteristic

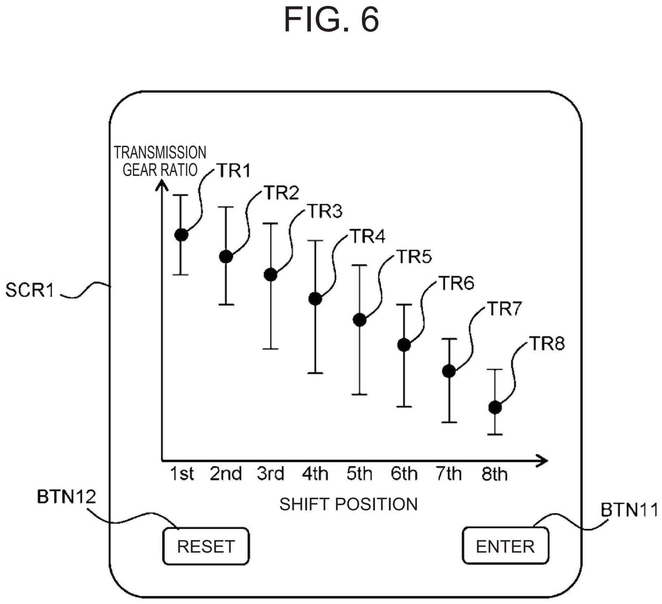

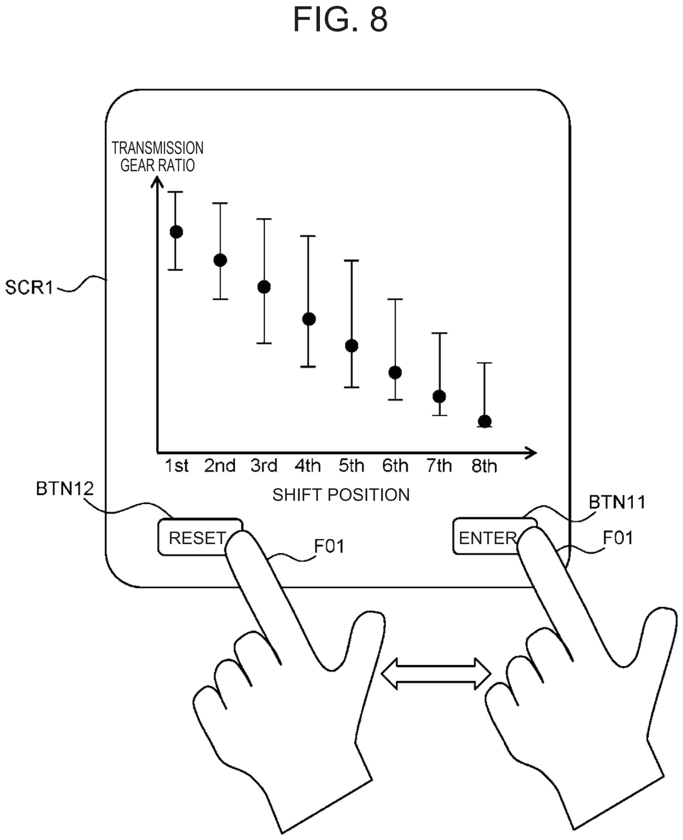

The customization method for the vehicle characteristic in the case where the option "customization" is selected on the HMI 20 will be specifically described with some examples. First, as one specific example, a customization method for the gear-shifting characteristic in the paddle shift mode will be described with use of FIG. 6 to FIG. 9.

First, when the user selects the option "customization" CM311 or the option "customization" CM312, a screen SCR1 shown in FIG. 6 is displayed on the touch panel display of the HMI 20. On the screen SCR1, a characteristic line diagram showing transmission gear ratios at the respective shift positions is displayed. This characteristic line diagram corresponds to the map for transmission gear ratios at the respective shift positions that is used in the transmission model MOD13. In the examples shown in FIG. 6, there are a first gear to an eighth gear, as shift positions in the paddle shift mode. In the characteristic line diagram, the transmission gear ratio at each shift position is shown by a black circle. For example, a black circle TR3 shows the transmission gear ratio in the third gear, and a black circle TR4 shows the transmission gear ratio in the fourth gear. Further, in the characteristic line diagram, the permissible range of the transmission gear ratio at each shift position is shown by high and low lines. Together with the characteristic line diagram, an enter button BTN11 and a reset button BTN12 are displayed on the screen SCR1.

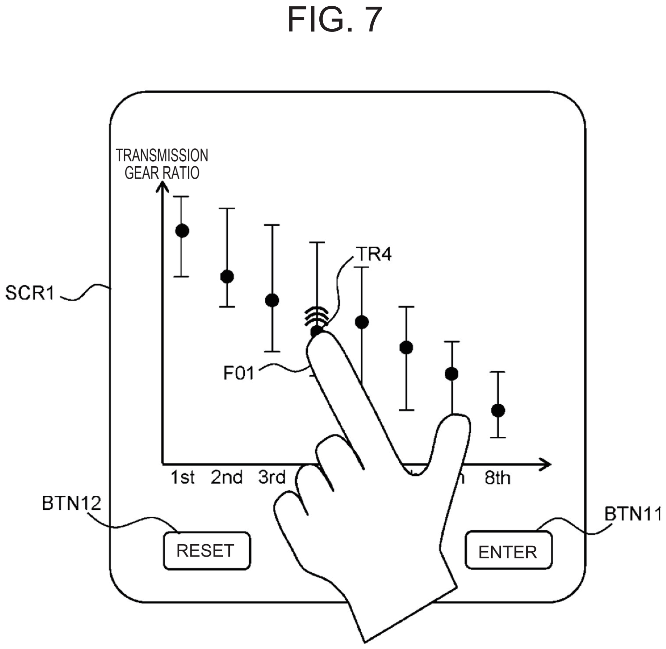

The user can directly edit the characteristic line diagram showing the transmission gear ratios at the respective shift positions, on the screen SCR1. For example, in the case where the transmission gear ratio in the fourth gear is decreased, the black circle TR4 is dragged downward by a finger F01, and thereby, the position of the black circle TR4 on the characteristic line diagram is lowered, as shown in FIG. 7. The transmission gear ratios at the other shift positions can be individually edited, similarly. Further, although not illustrated, in the customization of the gear-shifting characteristic in the paddle shift mode, 7-speed gear shifting can be adopted by removing a black circle corresponding to the eighth gear from the characteristic line diagram, or 9-speed gear shifting can be adopted by adding a black circle corresponding to a ninth gear to the characteristic line diagram. After the customization to a preferred gear-shifting characteristic is performed as the whole, the enter button BTN11 is clicked by the finger F01, so that the customized gear-shifting characteristic is registered in the memory 103 as the customized setting. In the case where the customization is restarted from the beginning, the reset button BTN12 is clicked by the finger F01, so that all black circles on the characteristic line diagram return to original positions before the edit.

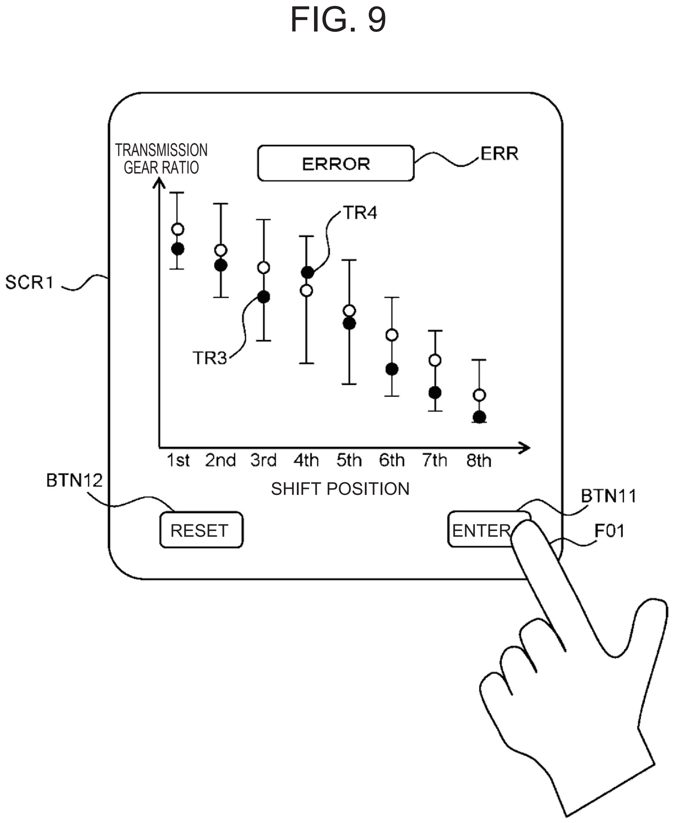

By operating the HMI 20 as described above, the user can customize the gear-shifting characteristic of the MT engine vehicle that is reproduced in the vehicle 100, to a preferred gear-shifting characteristic. However, all gear-shifting characteristics customized by the user cannot be always registered. For example, in the comparison between the black circle TR3 and the black circle TR4 shown in FIG. 9, the black circle TR4 is set at a higher position than the black circle TR3. This means that the transmission gear ratio in the fourth gear is set so as to be higher than the transmission gear ratio in the third gear. However, in such a setting for the transmission gear ratio, the vehicle 100 cannot smoothly travel, and there is fear that an undrivable state of the vehicle 100 is caused. That is, when the relation of the transmission gear ratio among shift positions is evaluated as the whole, the relation shown in FIG. 9 cannot be accepted as the setting for the gear-shifting characteristic of the vehicle 100 as the MT engine vehicle. Further, in the case where the difference between the transmission gear ratios at adjacent shift positions is extremely large, it cannot be said that the gear-shifting characteristic matches the vehicle 100, similarly.

In the customization system, the condition of the gear-shifting characteristic that matches the vehicle 100 is previously determined. In the case where the setting for the gear-shifting characteristic customized by the user, that is, the customized setting falls outside the matching condition, the customized setting is not registered in the memory 103 even when the enter button BTN11 is clicked by the finger F01. In this case, an error indication ERR is displayed on the screen SCR1, and the transmission gear ratios at the respective shift positions are forcibly returned to original positions as shown by white circles on the characteristic line diagram. Alternatively, until the user clicks the reset button BTN12, a wait state may merely continue while the error indication ERR is displayed on the screen SCR1. In any event, in the case where the customized setting does not match the vehicle 100, the registration of the customized setting is canceled, and the current setting or the default setting is maintained as the setting for the vehicle characteristic of the vehicle 100 as the MT engine vehicle.

### 5-3-2. Customization Method for Engine Characteristic

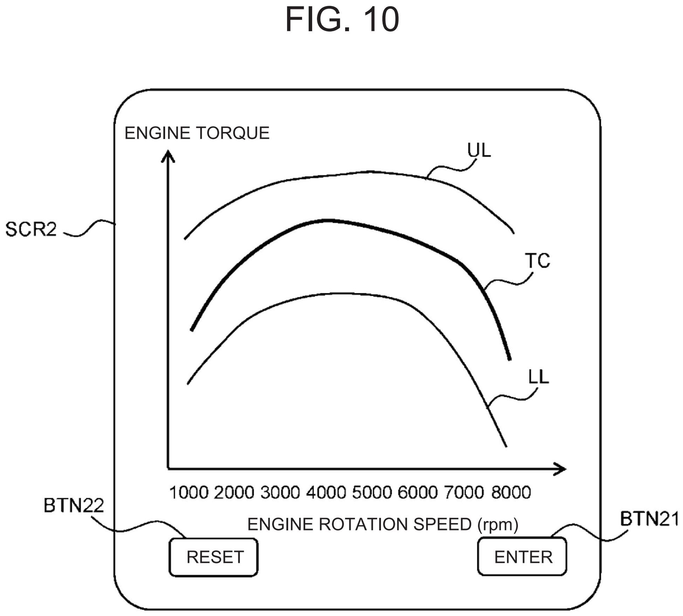

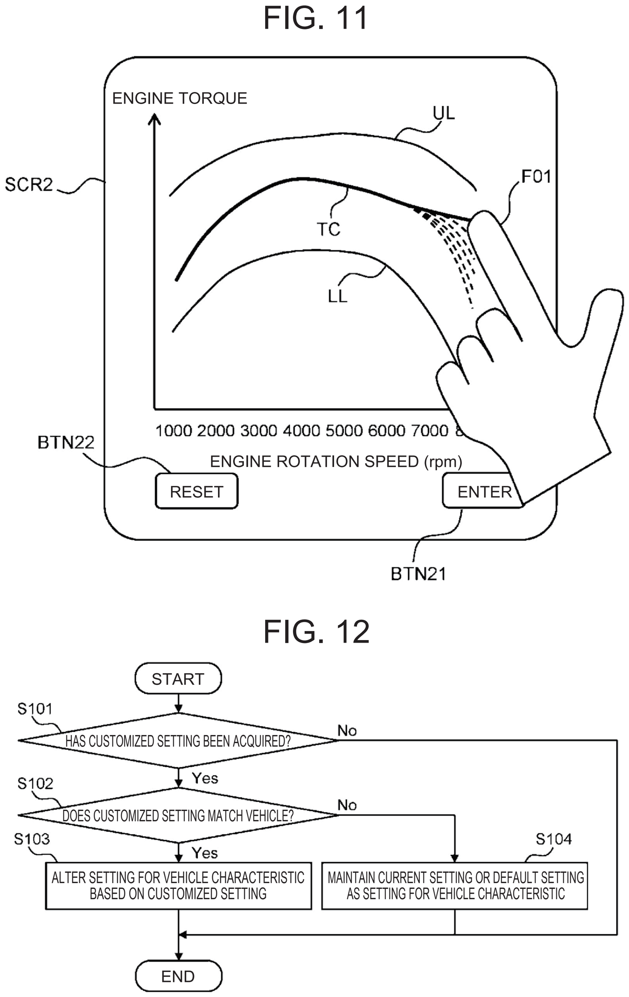

Next, as another specific example, a customization method for the engine characteristic of the MT engine vehicle that is reproduced in the vehicle 100 will be described with use of FIG. 10 and FIG. 11.

First, when the user selects the option "customization" CM331 or the option "customization" CM332, a screen SCR2 shown in FIG. 10 is displayed on the touch panel display of the HMI 20. On the screen SCR2, a characteristic line diagram showing the relation between the engine rotation speed and the engine torque is displayed. This characteristic line diagram corresponds to the map for the engine rotation speed and the engine torque that is used in the engine model MOD11. In the characteristic line diagram, a torque curve TC that is currently set, and an upper limit UL and a lower limit LL of the engine torque with respect to the engine rotation speed are shown. Together with the characteristic line diagram, an enter button BTN21 and a reset button BTN22 are displayed on the screen SCR2.

The user can directly edit the characteristic line diagram showing the engine torque with respect to the engine rotation speed, on the screen SCR2. For example, in the case where the engine torque in a high rotation region is increased, an end portion of the torque curve TL on the high rotation side is dragged upward by the finger F01, as shown in FIG. 11. Thereby, a region of the torque curve TL on the high rotation side is moved upward as the whole, and the engine characteristic is changed to a high rotation type. The user can customize the torque curve TL to an arbitrary shape, between the upper limit UL and the lower limit LL. After the customization to a preferred engine characteristic is performed as the whole, the enter button BTN21 is clicked by the finger F01, so that the customized engine characteristic is registered in the memory 103 as the customized setting. In the case where the customization is restarted from the beginning, the reset button BTN22 is clicked by the finger F01, so that the torque curve TL on the characteristic line diagram returns to an original shape.

By operating the HMI 20 as described above, the user can customize the engine characteristic of the MT engine vehicle that is reproduced in the vehicle 100, to a preferred engine characteristic. However, in the customization system, the condition of the setting for the engine characteristic that matches the vehicle 100 is previously determined similarly to the customization of the gear-shifting characteristic. For example, it is determined that such a setting that the engine torque rapidly increases in a high rotation region and such a setting that the engine torque rapidly decreases in a middle rotation region fall outside the matching range of the vehicle 100. In the case where the customized setting for the engine characteristic falls outside the matching range, the registration of the customized setting is canceled, and the current setting or the default setting is maintained as the setting for the vehicle characteristic of the vehicle 100 as the MT engine vehicle.

### 5-4. Next, a processing flow will be described.

The above-described process that is executed by the customization system can be expressed as a flowchart shown in FIG. 12. The control device 101 constituting the customization system executes a routine shown in the flowchart, with a predetermined period.

In the routine shown in FIG. 12, first, the process of step S101 is performed. In the process of step S101, it is determined whether the customized setting has been acquired in the HMI 20. The acquisition of the customized setting means that the setting customized by the user has been input to the HMI 20. As a specific example, in the case of the section "5-3-1. Customization Method for Gear-Shifting Characteristic", it is determined that the customized setting has been acquired, when the enter button BTN11 is clicked. Until the customized setting has been acquired, subsequent processes are skipped.

In the case where the customized setting has been acquired, the process of step S102 is performed. In the process of step S102, it is determined whether the customized setting matches the vehicle 100. In the case where it is determined that the customized setting matches the vehicle 100, the setting for the vehicle characteristic of the vehicle 100 as the MT engine vehicle is altered based on the customized setting, in the process of step S103. In the case where it is not determined that the customized setting matches the vehicle 100, the current setting or the default setting is maintained as the setting for the vehicle characteristic of the vehicle 100 as the MT engine vehicle, in the process of step S104. Thereby, the user can enjoy the customization of the vehicle characteristic, without causing the undrivable state of the vehicle 100.

### 6. Next, the application to the AT engine vehicle will be described.

### 6-1. Control Mode of Vehicle

The control mode of the vehicle 100 described in FIG. 2 includes the automatic mode for driving the vehicle 100 as an ordinary BEV and the manual mode for causing the vehicle 100 to act as if the vehicle 100 were the MT engine vehicle. However, in the exemplary configuration of the vehicle 100 described in FIG. 1, it is possible to cause the vehicle 100 to act as if the vehicle 100 were an automatic gear-shifting engine vehicle (that is, an AT engine vehicle) including a stepped transmission.

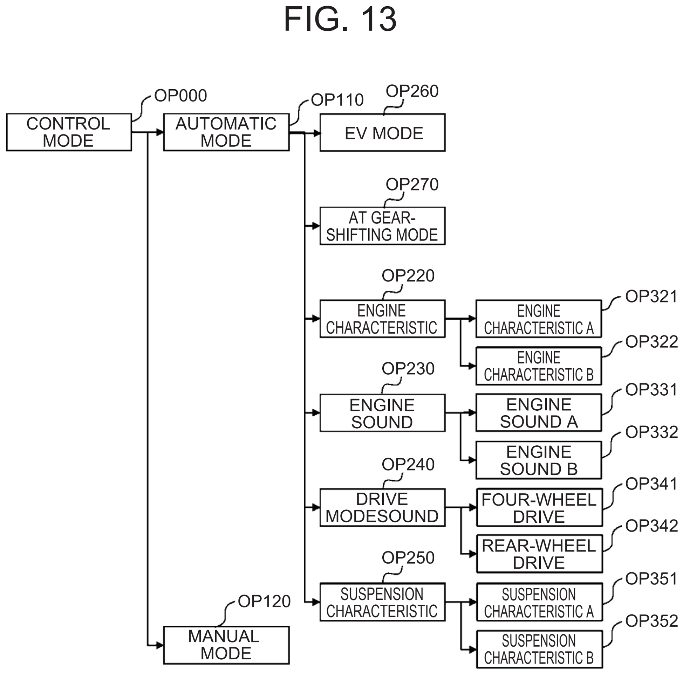

For causing the vehicle 100 to act as if the vehicle 100 were the AT engine vehicle, it is only necessary to set a control mode for the AT engine vehicle as a virtual vehicle. FIG. 13 is a tree diagram showing other exemplary control modes of the vehicle 100 that can be selected by the control device 101. On the HMI 20, a selection screen is displayed on the touch panel display, in accordance with a control tree shown in FIG. 13.

An option "control mode" OP000 is displayed on the initial screen of the HMI 20. By selecting the option "control mode" OP000, an option "automatic mode" OP110 and an option "manual mode" OP120 are displayed on the touch panel display. The above description is the same as that about FIG. 2.

In the case where the option "automatic mode" OP110 is selected, the control mode of the vehicle 100 switches to an automatic mode. By selecting the option "automatic mode" OP110, an option "EV mode" OP260, an option "AT gear-shifting mode" OP270, an option "engine characteristic" OP220, an option "engine sound" OP230, an option "drive mode" OP240, and an option "suspension characteristic" OP250 are displayed on the touch panel display. The options OP220 to OP250 are the same as the options that are displayed on the touch panel display at the time of the selection of the option "manual mode" OP120 described with FIG. 2.

The option "EV mode" OP260 shows a control mode for driving the vehicle 100 as an ordinary BEV. The option "AT gear-shifting mode" OP270 shows a control mode for causing the vehicle 100 to act as if the vehicle 100 were the AT engine vehicle. In the EV mode and the AT gear-shifting mode, basically, the driver can drive the vehicle 100, simply by the operation of the accelerator pedal 22, the brake pedal 23, and the unillustrated steering wheel. In the EV mode and the AT gear-shifting mode, the shift operation of the pseudo H-shifter 24, the shift operation of the pseudo paddle shifter 25, and the clutch operation of the pseudo clutch pedal 26 are invalid.

### 6-2. Traveling Control of Vehicle

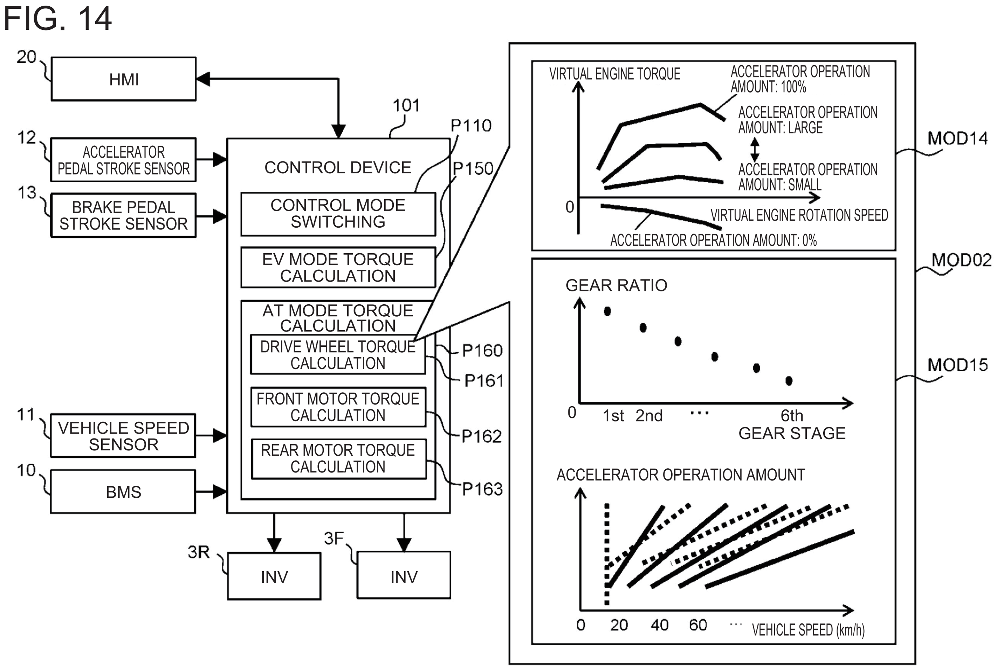

FIG. 14 is a diagram showing a configuration of the control device 101 that is relevant to the traveling control of the vehicle 100. More specifically, FIG. 14 shows a configuration that is particularly relevant to a torque control of the traveling control. The control device 101 as the traveling control device receives a control mode signal from the HMI 20. The control mode signal includes information relevant to the control mode selected by the driver. The control device 101 executes a process P110 based on the control mode signal. In the process P110, the control mode is switched in accordance with the control mode signal. The switching of the control mode that particularly influences the traveling control is the switching between an EV mode and an AT mode.

In the case where the control mode is switched to the EV mode, the control device 101 executes a process P150 for calculating the torque in the EV mode. In the process P150, the control device 101 acquires the vehicle speed from the signal of the vehicle speed sensor 11, and acquires the accelerator operation amount from the signal of the accelerator pedal stroke sensor 12. The control device 101 has a motor torque map in which the accelerator operation amount and the vehicle speed are adopted as parameters. The control device 101 inputs the vehicle speed and the accelerator operation amount to the motor torque map, and controls the inverters 3F, 3R such that the electric motors 4F, 4R generate the torque obtained by the motor torque map.

In the case where the control mode is switched to the AT mode, the control device 101 executes a process P160 for calculating the torque in the AT mode. The process P160 includes a process P161 for calculating the torque that is generated in the drive wheels. Further, the process P160 includes a process P162 and a process P163. The process P162 is a process for calculating the torque that is generated by the front electric motor 4F, and the process P163 is a process for calculating the torque that is generated by the rear electric motor 4R. The process P162 and the process P163 are executed in accordance with the drive wheel torque calculated in the process P160 and the torque distribution between the front wheels 6F and the rear wheels 6R.

For the calculation of the drive wheel torque in the process P161, a vehicle model MOD02 is used. The vehicle model MOD02 includes an engine model MOD14 and a transmission model MOD15. In the engine model MOD14, a virtual engine is modeled. The configuration of the engine model MOD14 is substantially the same as the configuration of the engine model MOD11 described in FIG. 3. In the transmission model MOD15, a virtual transmission is modeled.

The transmission model MOD15 calculates gear ratios in respective gear stages and a condition of switching between two adjacent virtual gear stages. A virtual gear ratio is a gear ratio that is determined by a virtual gear stage in the virtual transmission. The virtual gear ratio is set for each gear stage. A maximal virtual gear ratio is set for a first gear, and the virtual gear ratio decreases in the order of a second gear, a third gear, a fourth gear, .... The switching condition between two adjacent gear stages is set in association with the combination of the vehicle speed and the accelerator operation amount, and is expressed by a gear-shifting line map. The gear-shifting line map is included in the data 105 recorded in the memory 103.

The transmission model MOD15 calculates virtual transmission torque using the virtual gear ratio and the switching condition between gear stages. The virtual transmission torque is virtual torque that is output from the virtual transmission. The control device 101 controls the inverters 3F, 3R such that the output torques of the electric motors 4F, 4R are changed depending on the virtual transmission torque. The virtual transmission torque changes depending on the switching of the virtual gear ratio. The change in the virtual transmission torque generates torque shock in the vehicle 100, so that a similar operational feeling to the operational feeling for a vehicle including a stepped transmission is obtained.

The vehicle model MOD01 calculates the drive wheel torque from the virtual transmission torque and a speed reduction ratio. In the case where the four-wheel drive mode is selected as the drive mode, the drive wheel torque is the sum of torques that acts on the right and left front wheels 6F and the right and left rear wheels 6R. The torque distribution between the front wheels 6F and the rear wheels 6R may be fixed, or may be changed actively or passively. In the case where the rear-wheel drive mode is selected as the drive mode, the drive wheel torque is the sum of torques that act on the right and left rear wheels 6R.

In the process P162, the torque (front motor torque) of the front electric motor 4F in the manual mode is calculated by multiplying the drive wheel torque calculated in the process P161 by a torque distribution ratio for the front wheels 6F and a speed reduction ratio from the output shaft of the front electric motor 4F to the front wheels 6F. The control device 101 controls the front inverter 3F such that the front electric motor 4F generates the front motor torque calculated in the process P162.

In the process P163, the torque (rear motor torque) of the rear electric motor 4R in the manual mode is calculated by multiplying the drive wheel torque calculated in the process P161 by a torque distribution ratio for the rear wheels 6R and a speed reduction ratio from the output shaft of the rear electric motor 4R to the rear wheels 6R. The control device 101 controls the rear inverter 3R such that the rear electric motor 4R generates the rear motor torque calculated in the process P163.

### 6-3. Sound Control of Vehicle

The sound control of the vehicle 100 is applied also to the generation of a pseudo engine sound that resembles an engine sound in the AT engine vehicle. For example, in the case where a control mode signal indicating the selection of the AT mode is input from the HMI 20, the control device 101 as the sound control device outputs an engine sound selected through the HMI 20, from the in-vehicle speaker 21. Processes that are performed in this sound control are basically the same as the process 140 and the process 141 described in FIG. 4.

### 6-4. Next, the customization of the gear-shifting characteristic will be described.

### 6-4-1. Overview of Customization

The customization system described in the section "5. Customization of Vehicle Characteristic" customizes the vehicle characteristic of the MT engine vehicle. In the present section, the customization of the vehicle characteristic of the AT engine vehicle will be discussed. The customization of the vehicle characteristic of the AT engine vehicle is basically the same as that of the MT engine vehicle. However, in the gear shifting of a general AT engine vehicle, a gear-shifting line map is used, and the transmission model MOD15 is also constructed based on the gear-shifting line map. Hence, in the customization of the gear-shifting characteristic of the AT engine vehicle, the customization of gear-shifting lines shown in the gear-shifting line map is performed in addition to the customization of the gear ratios in the respective gear stages.

### 6-4-2. Procedure and Specific Example of Customization

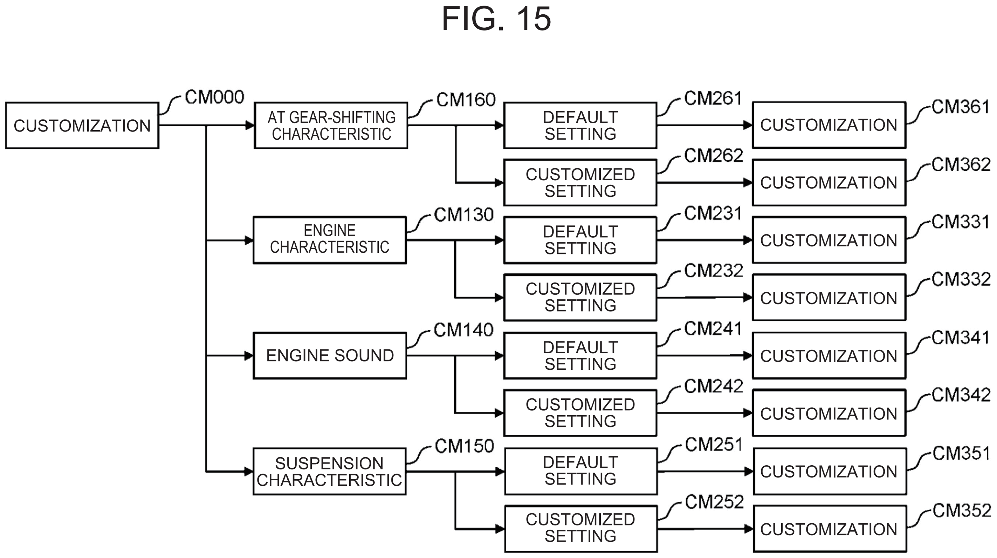

FIG. 15 is a tree diagram showing an exemplary operation procedure of the HMI 20 for the customization of the gear-shifting characteristic of the AT engine vehicle. An option "customization" CM000 is displayed on the touch panel display of the HMI 20. By selecting the option "customization" CM000, an option "AT gear-shifting characteristic" CM160, an option "engine characteristic" CM130, an option "engine sound" CM140, and an option "suspension characteristic" CM150 are displayed on the touch panel display. The options CM000 and CM130 to CM150 are the same as those in FIG. 5.

In the case where the option "AT gear-shifting characteristic" CM160 is selected, the gear-shifting characteristic of the AT engine vehicle can be customized. The procedure of the customization of the gear-shifting characteristic of the AT engine vehicle is the same as the procedure of the customization of the gear-shifting characteristic described in FIG. 5. By selecting an option "default setting" CM261 and selecting an option "customization" CM361, the user can customize the gear-shifting characteristic of the AT engine vehicle, based on the default setting. Further, by selecting an option "customized setting" CM262 and selecting an option "customization" CM362, the user can customize the gear-shifting characteristic of the AT engine vehicle, based on the currently registered customized setting.

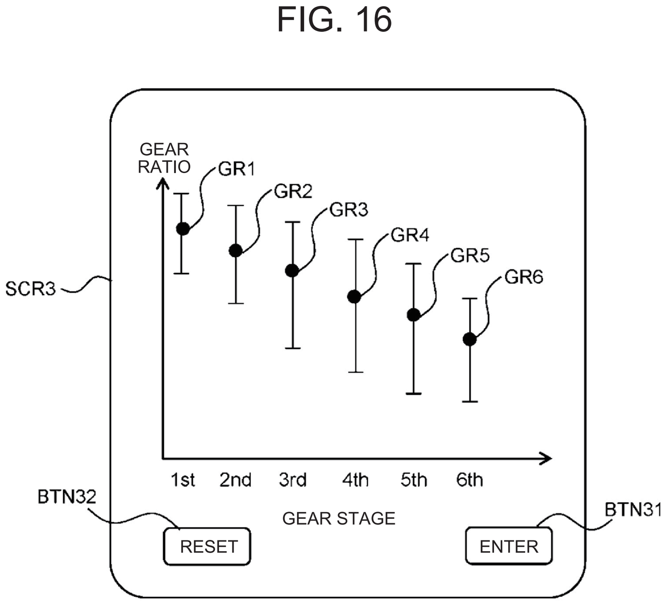

When the user selects the option "customization" CM361 or the option "customization" CM362, a screen SCR3 shown in FIG. 16 is displayed on the touch panel display of the HMI 20. The screen SCR3 shown in FIG. 16 is a screen for customizing the gear ratio. The specific customization method for the gear ratio is basically the same as that of the transmission gear ratio described with FIG. 6 to FIG. 9. That is, a characteristic line diagram showing gear ratios in the respective gear stages is displayed on the screen SCR3. This characteristic line diagram corresponds to the map for gear ratios in the respective gear stages that is used in the transmission model MOD15. In the example shown in FIG. 16, there are a first gear to a sixth gear, as gear stages. In the characteristic line diagram, the gear ratio in each gear stage is shown by a black circle. For example, a black circle GR3 shows the gear ratio in the third gear, and a black circle GR4 shows the gear ratio in the fourth gear. Further, in the characteristic line diagram, the permissible range of the gear ratio in each gear stage is shown by high and low lines. Together with the characteristic line diagram, an enter button BTN31 and a reset button BTN32 are displayed on the screen SCR3.

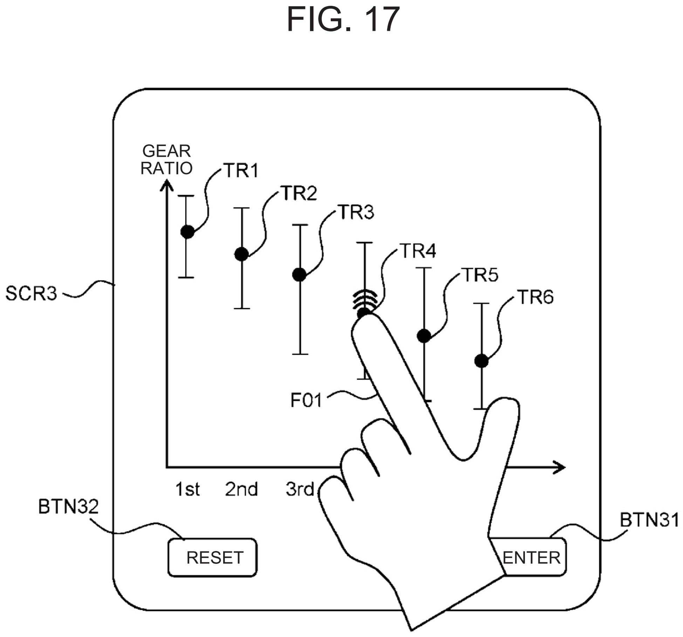

The user can directly edit the characteristic line diagram showing the gear ratios in the respective gear stage, on the screen SCR3. For example, in the case where the gear ratio in the fourth gear is decreased, the black circle GR4 is dragged downward by the finger F01, and thereby, the position of the black circle GR4 on the characteristic line diagram is lowered, as shown in FIG. 17. The gear ratios in the other gear stages can be individually edited, similarly. Further, although not illustrated, 5-speed gear shifting can be adopted by removing a black circle corresponding to the sixth gear from the characteristic line diagram, or 7-speed gear shifting can be adopted by adding a black circle corresponding to a seventh gear to the characteristic line diagram. After the customization to a preferred gear-shifting characteristic is performed as the whole, the enter button BTN31 is clicked by the finger F01, so that the customized gear-shifting characteristic is registered in the memory 103 as the customized setting. In the case where the customization is restarted from the beginning, the reset button BTN32 is clicked by the finger F01, so that all black circles on the characteristic line diagram return to original positions before the edit.

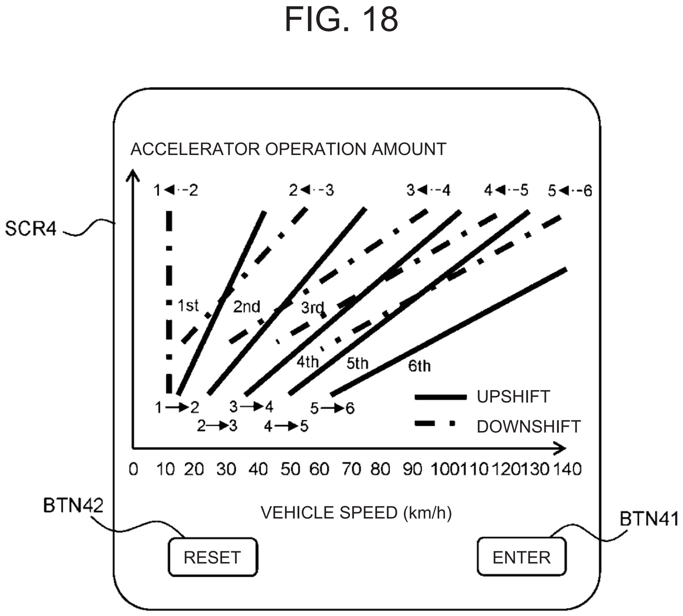

After the enter button BTN31 on the screen SCR3 shown in FIG. 16 is clicked by the finger F01, a screen SCR4 shown in FIG. 18 is displayed on the touch panel display of the HMI 20. On the screen SCR4, a gear-shifting line diagram is displayed. The gear-shifting line diagram shows the relation of a gear-shifting line showing a switching condition between two adjacent gear stages, and the vehicle speed and the accelerator operation amount. The gear-shifting line diagram corresponds to the gear-shifting line map that is used in the transmission model MOD15. In the example shown in FIG. 18, currently set upshift lines and downshift lines are shown in the gear-shifting line diagram. Together with the gear-shifting line diagram, an enter button BTN41 and a reset button BTN42 are displayed on the screen SCR4.

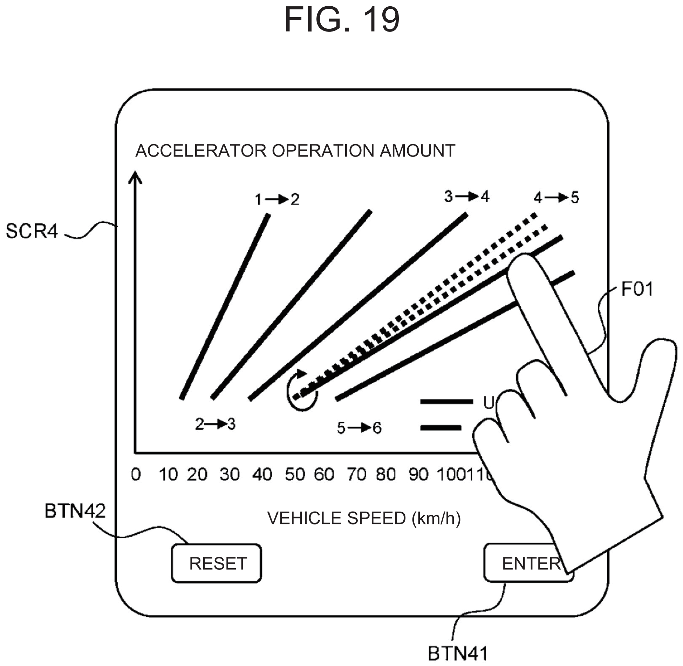

The user can directly edit an arbitrary upshift line or downshift line, on the screen SCR4. For example, in the case where the inclination of an upshift line indicating a switching condition from the fourth gear to the fifth gear is edited, an upshift line between the fourth gear and the fifth gear is touched by the finger F01 and is dragged in a direction in which the user wants to incline the upshift line, as shown in FIG. 19. In the example shown in FIG. 19, the upshift line between the fourth gear and the fifth gear is customized such that the switching from the fourth gear to the fifth gear occurs in a region in which the vehicle speed is high and the accelerator operation amount is small. Only the inclination of a part of the upshift line can be customized instead of the inclination of the whole of the upshift line. After the customization to a preferred gear-shifting line characteristic is performed as the whole, the enter button BTN41 is clicked by the finger F01, so that the customized gear-shifting line characteristic is registered in the memory 103 as the customized setting. In the case where the customization is restarted from the beginning, the reset button BTN42 is clicked by the finger F01, so that the upshift line returns to an original position.

By operating the HMI 20 as described above, the user can customize the gear-shifting characteristic of the AT engine vehicle that is reproduced in the vehicle 100, to a preferred gear-shifting characteristic. However, similarly to the customization of the gear-shifting characteristic of the MT engine vehicle, the condition of the setting for the gear-shifting characteristic that matches the vehicle 100 is previously determined in the customization system. For example, in the case of a customized setting in which a gear ratio on a high-speed side is higher than a gear ratio on a low-speed side, it is determined that the gear-shifting characteristic does not match the vehicle 100. Further, in the case of a customized setting in which the gear ratios between adjacent gear stages are extremely close or apart, it is determined that the gear-shifting characteristic does not match the vehicle 100. In the case where the customized setting falls outside the matching condition, the registration of the customized setting is canceled, and the current setting or the default setting is maintained as the setting for the gear-shifting characteristic of the vehicle 100 as the AT engine vehicle.

### 6-4-3. Automatic Customization of Gear-Shifting Line

There can be a case where only the registration of the customized setting for the gear ratio of the stepped transmission is performed and the registration of the customized setting for the gear-shifting line is not performed. The customization of the gear ratio can be performed by a relatively simple operation, but as for the customization of the gear-shifting line, it is necessary to repeat the customization with the gear ratio until a preferred switching condition can be set. Therefore, there is a possibility that the user gives up the registration of the customized setting for the gear-shifting line in the middle after the user performs the registration of the customized setting for the gear ratio. In that case, there is a possibility of a failure in which the virtual engine rotation speed excessively increases or decreases and a desired acceleration or deceleration cannot be obtained at the time of the traveling control to imitate the traveling of the AT engine vehicle after the registration of the customized setting.

For avoiding the occurrence of such a failure, in the case where only the registration of the customized setting for the gear ratio is performed and the registration of the customized setting for the gear-shifting line is not performed, the customization of the gear-shifting line is performed by the control device 101. For example, the customization of the gear-shifting line by the control device 101 can be performed based on values before and after the customization of the gear ratio in a particular gear stage for which the registration of the customized setting is performed. In this example, which is a first example, "rb" represents the value of the gear ratio before the registration of the customized setting in the particular gear stage, and "ra" represents the value of the gear ratio after the registration. In that case, gear-shifting lines crossing the particular gear stage can be customized by multiplying the data (the vehicle speed and the accelerator operation amount) forming an upshift line and a downshift line between the particular gear stage and a gear stage adjacent to the particular gear stage by a customization rate rb/ra.

In a second example, the automatic customization is performed based on a driving history related to the gear shifting by the pseudo gear-shifting operation member (the pseudo H-shifter 24, the pseudo paddle shifter 25, and the pseudo clutch pedal 26) in the manual mode. Examples of the driving history include shift positions before and after the gear shifting by the pseudo gear-shifting operation member and the virtual engine rotation speed and the virtual engine torque at the timing of the gear shifting by the pseudo gear-shifting operation member. The virtual engine rotation speed and the virtual engine torque are calculated using the engine model MOD11. The virtual engine rotation speed and the virtual engine torque are collected for each shift position. Therefore, as to a certain shift position, the virtual engine rotation speed and the virtual engine torque at the time of the upshift or downshift from the shift position can be associated with the shift position.

In the second example, whether the feature of the gear-shifting operation by the user depends on the engine rotation speed or the engine torque is learned based on the history of the virtual engine rotation speed and the virtual engine torque associated with the shift position. In the case where it is estimated that the feature of the gear-shifting operation depends on the engine rotation speed as a result of the learning, the data forming an upshift line and a downshift line between a particular gear stage corresponding to the shift position and a gear stage adjacent to the particular gear stage is customized using the customization rate, similarly to the first example. On the other hand, in the case where it is estimated that the feature of the gear-shifting operation depends on the engine torque, only the data about the gear-shifting line in a region in which the virtual engine torque is high, that is, a region in which the accelerator operation amount is large, is customized using the customization rate, and as for the data about the gear-shifting line in the other accelerator operation amount region, the current data is maintained. Thereby, it is possible to customize gear-shifting lines crossing the particular gear stage, while restraining an excessive increase or decrease in the virtual engine rotation speed at the time of acceleration or deceleration.

### 6-4-4. Processing Flow

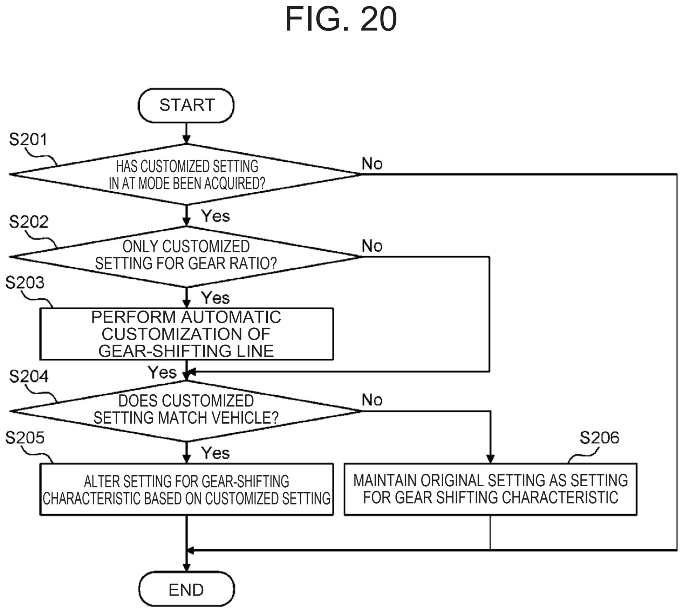

The above-described process that is executed by the customization system can be expressed as a flowchart shown in FIG. 20. The control device 101 constituting the customization system executes a routine shown in the flowchart, with a predetermined period.

In the routine shown in FIG. 20, first, the process of step S201 is performed. In the process of step S201, it is determined whether the customized setting in the AT mode has been acquired in the HMI 20. The acquisition of the customized setting in the AT mode means that the setting customized by the user has been input to the HMI 20. As a specific example, in the case of the section "6-4-2. Procedure and Specific Example of Customization", it is determined that the customized setting for the gear ratio and the gear-shifting line has been acquired, when the enter button BTN31 is clicked. Until the customized setting for the gear ratio has been acquired, subsequent processes are skipped.

In the case where the customized setting has been acquired, the process of step S202 is performed. In the process of step S202, it is determined whether only the customized setting for the gear ratio has been acquired. In the case where the customized setting for the gear-shifting line has been acquired in addition to the gear ratio, the routine proceeds to step S204. In the case where the customized setting for the gear-shifting line has not been acquired, the process of step S203 is performed.

In the process of step S203, the automatic customization of the gear-shifting line is performed. The automatic customization of the gear-shifting line is performed based on the above-described first or second example. The customization rate of the gear ratio that is used in the automatic customization is calculated based on the latest gear ratio (ra) registered by the customized setting for the gear ratio and the gear ratio (rb) before the registration of the latest gear ratio.

In the process of step S204, it is determined whether the customized setting matches the vehicle 100. In the case where it is determined that the customized setting matches the vehicle 100, the setting for the gear-shifting characteristic of the vehicle 100 as the AT engine vehicle is altered based on the customized setting, in the process of step S205. In the case where it is not determined that the customized setting matches the vehicle 100, the current setting or the default setting is maintained as the setting for the vehicle characteristic of the vehicle 100 as the AT engine vehicle, in the process of step S206. Thereby, the user can enjoy the customization of the vehicle characteristic, without causing the undrivable state of the vehicle 100.

### 7. Other embodiments will be described.

Another configuration of the vehicle 100 may include only the pseudo H-shifter 24 and the pseudo clutch pedal 26, without including the pseudo paddle shifter 25. Further, another configuration of the vehicle 100 may include only the pseudo paddle shifter 25, without including the pseudo H-shifter 24 and the pseudo clutch pedal 26. Furthermore, another configuration of the vehicle 100 may include only the pseudo H-shifter 24, without including the pseudo paddle shifter 25 and the pseudo clutch pedal 26.

## Claims

1. A control system for controlling a vehicle (100) including an electric motor (4F, 4R) as a drive source, the control system comprising:
a single or plurality of storage devices (103) in which a vehicle model (MOD01, MOD02) and a gear-shifting line map for a stepped transmission are stored, the vehicle model (MOD01, MOD02) being a model for reproducing, in the vehicle (100), a vehicle characteristic of a virtual vehicle, the stepped transmission being included in an automatic gear-shifting engine vehicle as the virtual vehicle; and
a single or plurality of processing circuits configured to execute a traveling control to imitate traveling of the virtual vehicle, based on the vehicle model (MOD01, MOD02), wherein:
the vehicle model (MOD01, MOD02) includes a transmission model for reproducing, in the vehicle (100), a gear-shifting characteristic of the automatic gear-shifting engine vehicle, the transmission model being constructed based on the gear-shifting line map; and
the single or plurality of processing circuits is configured to execute a customization process of the gear-shifting characteristic in accordance with a customized setting for the gear-shifting characteristic, when the customized setting is received from a user interface.

2. The control system according to claim 1, wherein:
the single or plurality of processing circuits is configured to alter the gear-shifting characteristic based on the customized setting, in the customization process, when the customized setting matches the vehicle (100); and
the single or plurality of processing circuits is configured to maintain a current or default gear-shifting characteristic as the gear-shifting characteristic, in the customization process, when the customization setting does not match the vehicle (100).

3. The control system according to claim 1 or 2, wherein:
the customized setting includes a customized setting for a gear ratio in each gear stage and a customized setting for a switching condition between adjacent gear stages, the switching condition being prescribed by the gear-shifting line map;
the single or plurality of processing circuits is configured to set a switching condition from a particular gear stage to a gear stage adjacent to the particular gear stage, based on gear ratios before and after registration of a customized setting for the particular gear stage, in the customization process, when the customized setting includes a gear ratio in the particular gear stage and the customized setting does not include the switching condition from the particular gear stage to the adjacent gear stage; and
the single or plurality of processing circuits is configured to customize the gear-shifting characteristic, based on the gear ratio in the particular gear stage that is included in the customized setting and the set switching condition, in the customization process.

4. The control system according to claim 1 or 2, further comprising a pseudo gear-shifting operation member (24, 25, 26) that resembles a gear-shifting operation member included in a manual gear-shifting engine vehicle as the virtual vehicle, wherein:
the customized setting includes a setting for a gear ratio in each gear stage and a setting for a switching condition between adjacent gear stages, the switching condition being prescribed by the gear-shifting line map;
the single or plurality of processing circuits is configured to set a switching condition from a particular gear stage to a gear stage adjacent to the particular gear stage, based on gear ratios before and after registration of the customized setting for the particular gear stage and a driving history of the vehicle (100), in the customization process, when the customized setting includes a setting instruction of a gear ratio in the particular gear stage and the customized setting does not include a setting instruction of the switching condition from the particular gear stage to the adjacent gear stage, the driving history being related to gear shifting by the pseudo gear-shifting operation member (24, 25, 26) and being acquired during execution of a traveling control to imitate traveling of the manual gear-shifting engine vehicle; and
the single or plurality of processing circuits is configured to customize the gear-shifting characteristic, based on the setting instruction of the gear ratio in the particular gear stage that is included in the customized setting and the set switching condition, in the customization process.

5. The control system according to claim 4, wherein:
the vehicle model (MOD01, MOD02) includes an engine model for reproducing, in the vehicle (100), an engine characteristic of the manual gear-shifting engine vehicle;
the driving history further includes a virtual engine rotation speed and virtual engine torque that are calculated using the engine model;
the single or plurality of processing circuits is configured to estimate a feature of a gear-shifting operation by a driver of the vehicle (100), based on the virtual engine rotation speed and the virtual engine torque at a gear-shifting timing, in the customization process; and
the single or plurality of processing circuits is configured to adjust a setting range of the switching condition from the particular gear stage to the adjacent gear stage, based on the feature of the gear-shifting operation, in the customization process.

6. A method for controlling a vehicle (100) including an electric motor (4F, 4R) as a drive source, the method comprising:
causing a computer to execute a traveling control to imitate traveling of a virtual vehicle, based on a vehicle model (MOD01, MOD02) for reproducing, in the vehicle (100), a vehicle characteristic of the virtual vehicle, the vehicle model (MOD01, MOD02) including a transmission model for reproducing, in the vehicle (100), a gear-shifting characteristic of an automatic gear-shifting engine vehicle as the virtual vehicle, the transmission model being constructed based on a gear-shifting line map for a stepped transmission included in the automatic gear-shifting engine vehicle; and
causing the computer to execute a customization process of the gear-shifting characteristic in accordance with a customized setting for the gear-shifting characteristic, when the customized setting is received from a user interface.
